# EUROPEAN PATENT APPLICATION

(11) **EP 4 137 878 A1**
(43) Date of publication of application: **22.02.2023**
(21) Application number: 21191849.5
(22) Date of filing: 18.08.2021
(51) Int. Cl.: G02C 13/00, B29D 12/02, G02B 27/01, B29D 11/00, G02C 7/02

(54) **METHOD FOR PRODUCING A CUSTOMIZED VISUAL AID AND VISUAL AID**

(71) Applicant: Luxexcel Holding B.V., 5656 AE Eindhoven (NL)
(72) Inventor: GROET, Guido Adelbert, 5656AE Eindhoven (NL)
(74) Representative: Murgitroyd & Company

(57) **Abstract**

A method for producing a customized visual aid, in particular a binocular visual aid such as spectacles (1), is proposed, wherein the visual aid comprises a frame structure (2) and at least one lens (3), wherein the frame structure (2) comprises at least a total frame width (wₜₒₜ), a frame part width (wₚₐᵣₜ), a frame height (h) and a frame thickness, the method comprising the following steps:
- in a first step at least one characteristic facial parameter of a user is obtained, in particular an interpupillary distance (IPD),
- in a second step the frame structure (2) is produced, wherein the total frame width (wₜₒₜ), the frame part width (wₚₐᵣₜ), the frame thickness and/or the frame height (h) is chosen in dependance on the facial parameter,
- during or after the second step, the at least one lens (3) is produced and/or integrated into the frame structure (2).

## Description

### BACKGROUND

The present invention relates to a method for producing a customized visual aid, in particular a binocular visual aid such as spectacles, wherein the visual aid comprises a frame structure and at least one lens.

Such visual aids are long known. Traditionally, a user would search for a frame structure that fitted his/her facial features and/or the user's aesthetical preferences. If the user required corrective lenses, those would be produced and then subjected to an edging process in order to fit into the frame structure.

Nowadays, so called smart glasses are known, in which additional functionalities are implemented into the glasses. For example, a light guiding structure is implemented in the lens. In this case, it is important that the light guiding structure and therefore the lens is correctly positioned relative to the user's eye. This is traditionally achieved by the above-mentioned edging process. Yet, this might not be possible for lenses with embedded light guiding structures.

In recent years, additive manufacturing has been employed to produce lenses and/or frame structures for visual aids. By means of additive manufacturing, e.g. the frame structure may be custom-fitted to the user. A user may choose a frame structure model based on his/her preferences, facial and/or visual parameters of the user are measured and the frame structure is produced in dependence of the measurements. Thus, a visual aid may easily be produced in a customized way, allowing for a high versability and flexibility.

Yet, the customization proves challenging if e.g. the dimensions of the lens may not be changed. Therefore, there is a need for a method for producing a customized visual aid with correct alignment and a good fit.

### SUMMARY

Hence, it is a purpose of the present invention to provide a method for producing a customized visual aid, in particular a binocular visual aid such as spectacles, which does not show the described disadvantages of the prior art, but allows for a highly-customizable visual aid with excellent fit and optical alignment.

According to the present invention, this object is achieved by a method for producing a customized visual aid, in particular a binocular visual aid such as spectacles, wherein the visual aid comprises a frame structure and at least one lens, wherein the frame structure comprises at least a total frame width, a frame part width, a frame height and/or a frame thickness, the method comprising the following steps:
- in a first step at least one characteristic facial parameter of a user is obtained, in particular an interpupillary distance,
- in a second step the frame structure is produced, wherein the total frame width, the frame part width, the frame thickness and/or the frame height is chosen in dependance on the facial parameter,
- during or after the second step, the at least one lens is produced and/or integrated into the frame structure.

The method according to the invention advantageously allows for a customization of a visual aid even when the dimensions of the lens may not be changed, e.g. because it comprises a light guiding element and a correct optical alignment is essential. By changing the total frame width, the frame part width, the frame thickness and/or the frame height, a good fit the user's facial features as well as a correct optical alignment is guaranteed at the same time. In particular, the method may be described in other words by modifying the frame structure such as to move the lens position within the frame structure in order to account for the user's facial features while maintaining a correct optical alignment. The frame thickness is preferably an extension of the frame structure in a dimension perpendicular to a general plane of extension of the frame structure. The frame height is preferably a vertical distance between the lowest point of the frame structure to the highest point, in particular with regard to an orientation of a normal use. Preferably, the total frame width is a horizontal distance between the outer edges of the frame structure, in the case of a pair of spectacles in particular the end pieces. The frame part width is preferably an extension of the frame structure either radially relative to the lens optical center or a horizontal extension, e.g. at a predetermined position, e.g. under a nose bridge. The person skilled in the art will acknowledge that depending on the general shape of the frame structure, the frame part width may be different at different locations around the lens. Yet, the person skilled in the art understands that in order to modify the frame part width to account e.g. for a different interpupillary distance, in the context of the present invention, the frame part width is preferably determined and/or modified at an inner side of the frame structure, i.e. between two lenses, in particular under a nose bridge portion.

The embodiments described in conjunction with this subject matter of the present invention also apply to the further subject matters of the present invention and vice versa.

Preferably, the visual aid is a spectacles, i.e. a pair of glasses. Yet, other visual aids are producible by means of the inventive method as well, such as a monocle or a magnifying glass as long as they comprise a frame structure which may be modified according to a user's facial features and a lens, wherein in particular the user's pupil is aligned with the lens. More preferably, the visual aid is a binocular visual aid, i.e. it comprises two lenses such that the user may use the visual aid with both eyes. In particular, the visual aid comprises one frame structure in which two lenses are fitted.

Within the context of the present invention, the term visual aid does not necessarily imply that a visual impairment is corrected. A visual aid may e.g. also be a pair of smart-glasses, in particular with non-corrective lenses. In this case, the glasses "aid" the user by providing additional information, in particular by providing access to an augmented reality (AR). Preferably, the characteristic facial user parameter is measured during the first step, in particular via an optical measurement such as e.g. laser scanning and/or 3d-scanning. Alternatively or additionally, the parameter may be entered into a control system, e.g. a computer, and/or read from a data bank, e.g. an electronic data bank. Such a control system and/or data bank is preferably physically present at the location in which the second step is carried out and/or may be connected remotely, e.g. via a network such as the internet. More preferably, the control system controls the execution of the method according to the present invention and/or the data bank is connected to the data bank such that the control system may access the data bank and read and/or write the required information regarding parameters. Even more preferably, after measuring the at least one parameter, the parameter is entered and/or saved in the data bank.

According to an advantageous embodiment of the present invention, the characteristic facial parameter is an interpupillary distance (IPD), a face width, a nose width and/or a pupil height. More generally speaking, a characteristic facial parameter within the scope of the present invention is a user-specific parameter which is essential in achieving a good fit of the visual aid. This may e.g. further include indirectly relevant parameters, such as an ear height and/or a distance between both ears, which is important for a support structure such as hinged arms but not directly for the frame structure. Another example would be an eyebrow height and/or shape. This does not influence the fit of the visual aid per se, but may be important as an aesthetic parameter for the shape of the frame structure. While all of the above-mentioned parameters contribute to a good fit of the visual aid, the IPD is of particular interest, as this parameter is paramount for a good vision, which is the primary objective for a visual aid. Furthermore, the IPD is of particular relevance for smart-glasses as well, because the correct alignment between the user's pupil and the opening of a light guiding structure of the lens is essential for functionality and comfort.

According to a particularly advantageous embodiment of the present invention, the lens comprises a first point, which is preferably coincident with the lens optical center, and a distal second point, which is preferably located in distal end of the lens relative to the first point and in particular in the region of an end piece of the frame structure, wherein the distance between the first point and the second point is constant for different lenses and/or different frame structures. The person skilled in the art acknowledges that the most distal ends of a pair of frame front of a pair of spectacles in a horizontal extension are commonly referred to as end pieces. By having the distance between the first point and the second point constant for different lenses, the lenses' dimensions are at least partially predetermined. In particular, at the position of the second point, edging or any other kind of subtractive modification of the lens is not possible in order to keep the distance constant. Hence, it is even more important to modify a frame structure parameter, such as e.g. the total frame width and/or the frame part width to account for the user's facial parameters.

According to an advantageous embodiment of the present invention, during the first step at least one parameter indicative of the user's vision is obtained, wherein the lens is a corrective lens, in particular an ophthalmic lens, wherein the lens is produced in dependence of the parameter indicative of the user's vision. Preferably, the parameter is measured. Alternatively or additionally, the parameter may be entered into a control system, e.g. a computer, and/or read from a data bank, e.g. an electronic data bank. Such a control system and/or data bank is preferably physically present at the location in which the second step is carried out and/or may be connected remotely, e.g. via a network such as the internet. More preferably, the control system controls the execution of the method according to the present invention and/or the data bank is connected to the data bank such that the control system may access the data bank and read and/or write the required information regarding parameters. Even more preferably, after measuring the at least one parameter, the parameter is entered and/or saved in the data bank. As mentioned above, the lens may be an ophthalmic or corrective lens. Ophthalmic lenses comprise concave, convex, biconcave, biconvex and meniscus lenses. Ophthalmic lenses in the sense of the present invention also comprise multifocal lenses (including bifocal and trifocal lenses) as well as gradient-index lenses. Ophthalmic lenses comprise in particular spectacle lenses or other lenses that are not inserted into the eye. This is particularly advantageous as in this way, both the frame and the lens may be customized. Hence, a fully customized visual aid is provided.

According to an advantageous embodiment of the present invention, the frame structure comprises a substantially two-dimensional shape, wherein the frame structure is in particular a frame front. Hence, by adjusting the frame structure to the user's facial parameter(s), an optimal fit for the frame front may advantageously be achieved. The person skilled in the art understands that of course the frame structure is in reality a three-dimensional structure, i.e. it comprises an extension in a third dimension, in particular a thickness, as well. Yet, the extension in the third dimension is usually negligible compared to the extension in the other two dimensions, so that, for all intents and purposes of the present invention, the frame structure may be regarded as a substantially two-dimensional structure. Furthermore, the frame structure may comprise a main plane of extension. The main plane of extension may be substantially flat or it may be curved, e.g., the frame structure may be slightly bend and/or curved, in particular in the direction of its width and/or the direction of the greatest extension, to better conform to the user's face.

According to an advantageous embodiment of the present invention, the frame structure is attached to a support structure, wherein the support structure preferably comprises at least one temple, wherein the support structure is produced separately or integrally with the frame structure. Preferably, the support structure is produced as a separate piece, but in particular in the same step as the frame structure. The frame structure and the support structure are preferably connected via hinges, in particular at end pieces of the frame structure, i.e. in particular at the most distal regions of the frame structure.

According to an advantageous embodiment of the present invention, the frame structure and/or the lens are produced by means of additive manufacturing, preferably 3d-printing, in particular ink-jet printing. Preferably, the support structure is produced by means of additive manufacturing as well. Additive manufacturing is well known and a particularly versatile and reliable production technique. In the sense of the present invention, printing, in particular 3d-printing, of a structure comprises building up the structure from layers of printing ink, preferably through a targeted placement of droplets of printing ink at least partially side by side and in vertically stacked layers. The droplets of printing ink are ejected from one or more nozzles of a print head, typically towards a substrate. Droplets of layers constituting a second and subsequent layers are at least partly ejected towards a previously deposited layer, such that the three-dimensional structure is built up layer by layer. The printing ink preferably comprises a translucent or transparent component. More preferably, the printing ink comprises at least one photo-polymerizable component. The at least one photo-polymerizable component is even more preferably a monomer that polymerizes upon exposure to radiation, e.g. ultra-violet (UV) light. The deposited droplets are preferably pin cured, i.e. partially cured, after deposition. In particular, the viscosity of at least one component of the printing ink is increased. Pin curing is preferably carried out after deposition of the respective droplet or after deposition of an entire or only part of a layer. Alternatively, pin curing is carried out at certain intervals, e.g. after printing of every second layer. Hence, in case of ink-jet printing, the second step according to the present invention preferably comprises a plurality of substeps, wherein at least one substep consists in depositing droplets of printing ink in accordance with a predetermined pattern, wherein at least one further substep consists in passively or actively curing the deposited droplets. In this context, passively curing preferably includes letting the droplets dry/cure over time, whereas actively curing preferably includes acting upon the deposited droplets, e.g. submitting the droplets to additional energy such as electromagnetic radiation, in particular UV light. The substeps are preferably carried out at least partially subsequently. In particular, the substeps more preferably at least partially overlap.

According to an advantageous embodiment of the present invention, the frame structure and the lens are produced integrally and/or in the same production step. This advantageously allows for an efficient and fast production. Preferably, the frame structure and the at least one lens are produced from different materials. More preferably, this includes a same basic material, but with different characteristics, e.g. colors.

According to an advantageous embodiment of the present invention, the lens comprises a further optical component, preferably a light guiding element, in particular a waveguide. This advantageously allows for using the optical structure to superimpose information, for example for applications in the field of augmented reality. Thus, it is advantageously possible to produce a smart visual aid via the method according to the present invention. Preferably, the light guiding structure is integrally produced with the lens, in particular by means of additive manufacturing. More preferably, the lens comprises a front lens part and a rear lens part, wherein the further optical component is arranged between the front lens part and the rear lens part. Alternatively, the further optical component is arranged on an outer surface of the lens. The person skilled in the art understands that in particular with such a further optical component, traditional alignment techniques such as edging and/or polishing are not applicable since they may damage the further optical component. In comparison to a lens without such a further optical component, an additional element needs to be accounted for when aligning the components with the user's eye, in particular the pupil.

Preferably, the light guiding element comprises a first opening and a second opening, wherein preferably the first opening is coincident with the first point and/or the lens optical center, wherein more preferably the second opening is coincident with the second point. The second point is preferably positioned near or in an end piece of the frame structure and/or close to the edge of the lens. In this context, in a region of the frame structure in particular means that the lens comprises the second opening in a region where the lens and the frame structure overlap, e.g. in a region where the lens is fitted within the frame structure. Even more preferably, the first opening is a first waveguide opening, in particular an input opening, and the second opening is a second waveguide opening, in particular an output opening, or vice versa. Alternatively, the first opening and the second opening serve both as an input and as an output opening. It is herewith advantageously possible that information is transmitted from a different region to the center of the lens. This is particularly advantageous as the lens does not require additional components at the lens center, hence the impairment on the visibility of the lens may be minimized. In particular, in the case of the light guiding element being a waveguide, the first opening is usually referred to as an "eyebox".

According to a further advantageous embodiment of the present invention, the further optical component comprises a reflecting element, in particular a mirror, which is preferably located at the first point. In this way, an image may be projected by an image source directly or indirectly onto the reflecting element which reflects the image into the user's pupil. This advantageously allows for more flexibility in the smart eyewear design.

In any case, the person skilled in the art understands that a correct alignment is very important, in particular an alignment between the user's eye pupil, a rear lens part, an optical center of the lens, in particular the first point, e.g. an eyebox of a waveguide, and a front lens part (if present). Since traditional alignment techniques such as edging, cutting or polishing are not available since they may damage the further optical component, in particular the waveguide, the method according to the present invention provides a highly advantageous way to provide for a correct alignment.

According to an advantageous embodiment of the present invention, the shape and/or size of the light guiding element is constant for different lenses. In particular, the lens size is constant and preferably independent of the frame structure or frame design or frame shape. This means that the frame structure or frame design or frame shape needs to be adapted for the lens, in particular to accommodate the lens and provide for an optimal positioning of the lens with regard to the user's eye and in particular the pupil.

According to an advantageous embodiment of the present invention, during the second step the total frame width, the frame part width, the frame thickness and/or the frame height is chosen such that the further optical component, in particular the first opening, is aligned with the user's eye, in particular with a user's pupil, wherein preferably the first opening of the light guiding element is positioned at a closest distance from the user's pupil and/or is positioned such that the user's pupil is aligned with the optical center of the lens. It is herewith particularly advantageously possible to provide a customized visual aid with smart functionalities such as smart glasses, which on the one hand are optimally fitted to the user's face and on the other hand are perfectly aligned with the user's eye or pupil for optimal transmission.

According to an advantageous embodiment of the present invention, the frame structure at least partially, preferably fully, surrounds the at least one lens. Thus, it is advantageously possible to create even modern frame structures, in which there is e.g. no frame structure visible above, below and/or around the lens. The person skilled in the art understands that in accordance with the present invention, preferably left and right of the lens, a certain non-zero extension must exist in order to allow for the fitting of the visual aid to the facial parameter.

According to an advantageous embodiment of the present invention, the visual aid comprises two lenses, wherein the frame structure comprises a bridge portion arranged between both lenses, wherein in particular the bridge portion is a nose bridge portion comprising a nose bridge portion width, wherein the nose bridge portion is produced in dependence of a corresponding facial parameter of the user, in particular a nose width. The person skilled in the art understands that this means in particular that the visual aid is a binocular visual aid, in particular a pair of spectacles. Preferably, the nose bridge portion is fitted to the user for a good fit, in particular to prevent the visual aid from slipping or sagging, but that simultaneously, the nose bridge portion is kept constant when fitting the visual aid to the IPD of the user. Hence, most preferably, in particular for lenses comprising a light guiding structure, the frame structure is primarily modified by modifying the frame width and/or the frame height, while the lens size and the nose bridge portion width are kept constant. This advantageously allows for a perfect alignment and customized fit.

A further subject matter of the present invention is a visual aid, in particular a binocular visual aid, produced by a method according to the present invention.

The embodiments described in conjunction with this subject matter of the present invention also apply to the further subject matters of the present invention and vice versa.

For this subject-matter, the same advantages hold true as for the method according to the present invention, in particular a perfectly fitted or customized and perfectly optically aligned visual aid may be provided. This holds particularly true in the case of a visual aid comprising additional functionality, such as a smart visual aid comprising a light guiding structure in the lens.

### BRIEF DESCRIPTION OF THE DRAWINGS

- **Figures 1 and 2**: show a binocular visual aid produced by a method according to an advantageous embodiment of the present invention.
- **Figure 3**: shows a detail view of a binocular visual aid produced by a method according to an advantageous embodiment of the present invention.

### DETAILED DESCRIPTION

The present invention will be described with respect to particular embodiments and with target to certain drawings but the invention is not limited thereto but only by the claims. The drawings described are only schematic and are non-limiting. In the drawings, the size of some of the elements may be exaggerated and for illustrative purposes may not be drawn to scale.

Where an indefinite or definite article is used when referring to a singular noun, e.g. "a", "an", "the", this includes a plural of that noun unless something else is specifically stated.

Furthermore, the terms first, second, further and the like in the description and in the claims are used for distinguishing between similar elements and not necessarily for describing a sequential or chronological order, except for the method steps. It is to be understood that the terms so used are interchangeable under appropriate circumstances and that the embodiments of the invention described herein are capable of operation in other sequences than described or illustrated herein.

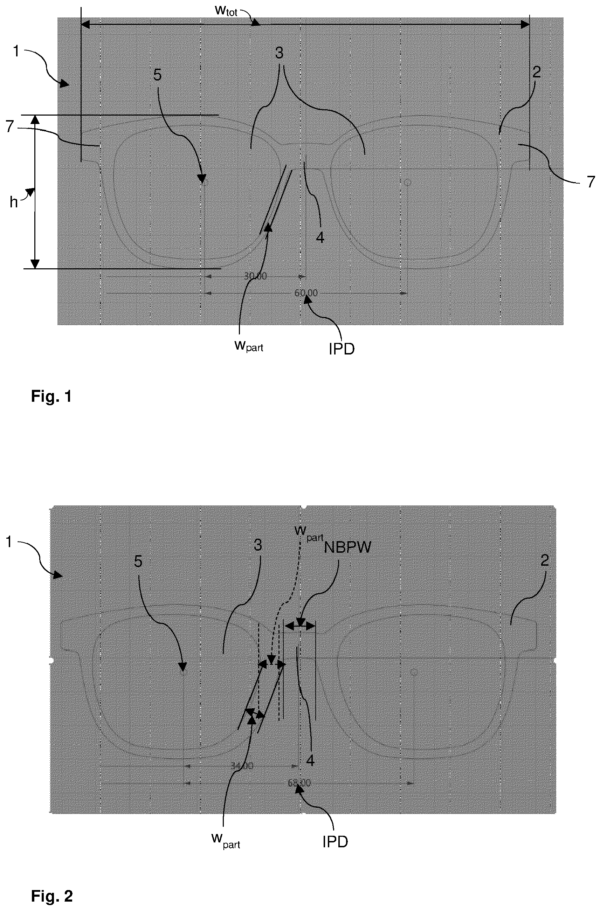

In **Figure 1****,** a binocular visual aid produced by a method according to an advantageous embodiment of the present invention is illustrated. Here, the visual aid is a pair of spectacles 1, i.e. it comprises a frame structure 2 with two lenses 3. The lenses 3 are fitted into the frame structure 2, which means that at least according to this embodiment, the lenses 3 are each fully surrounded by parts of the frame structure 3 in the drawing plane of **Figure 1****.** In particular, above, below, left and right of each lens 3 in **Figure 1****,** there is a non-zero extension of the frame structure 2, with other words, the frame parts surrounding the lenses 3 comprise a predetermined frame part width Wₚₐᵣₜ. Preferably, the frame part width wₚₐᵣ is measured radially relative to an optical center 5 of the respective lens 3

The spectacles 1, in particular the frame structure 2, comprise a nose bridge portion 4 between both lenses 3, i.e. a preferably arch-like structure which spans over the user's nose when worn correctly. The nose bridge portion 4 comprises a nose bridge portion width NBPW, which is preferably a horizontal distance over which the nose bridge portion 4 spans. The frame structure 2 may comprise integral or additional nose pads for a comfortable positioning on the user's nose. Preferably, the spectacles 1 further comprise a support structure extending into substantially a right angle relative to the frame structure 2, here e.g. into the drawing plane, in particular two temples which are preferably connected to the frame structure 2 by means of a hinge attached to end pieces 7 at each horizontally distal end of the frame structure 2, i.e here the leftmost and rightmost ends of the frame structure 2.

The lenses 3 may be corrective lenses, in particular ophthalmic lenses 3, i.e. they are configured for vision correction of the user, e.g. to help with myopia, astigmatism, presbyopia, hyperopia or similar conditions. Additionally, according to the embodiment discussed here, at least one of the lenses 3 comprises a light guiding structure, in particular a waveguide. This means that the spectacles 1 are so called smart glasses and provide enhanced functionality in that the waveguide is used to display additional information for the user's convenience. In particular, this allows the user to experience a so-called augmented reality (AR). The information is transmitted through the waveguide embedded in at least one of the lenses 3 and presented directly to the user's eye and specifically the pupil at an optimal position.

This optimal position generally coincides with the optical center 5 of the lens 3 at a first point 5. Therefore, a first opening of the waveguide 5, which might be an output (or input) opening of the waveguide, is arranged at the lens optical center 5. In order to allow for an optimal and fatigue-free information display, this lens optical center 5 therefore needs to be perfectly aligned with the pupil of the user's eye. Hence, the person skilled in the art understands that according to the preferred embodiment discussed here, the first point 5 coincides with the lens optical center 5 and the first waveguide opening 5.

Preferably, both the lenses 3 and/or the frame structure 2 are produced by means of additive manufacturing, in particular by means of 3d-printing. Most preferably, the frame structure 2 and/or the lenses are produced by means of ink-jet printing, e.g. multi-jet printing. In this well-known technology, droplets of a material, in particular a photo-polymerizable monomer, is ejected by a plurality of nozzles of a print head and deposited side by side and in vertically stacked layers. The monomer is cured, i.e. hardened to produce the desired structure. This in particular allows for an integral production of an ophthalmic lens with an embedded waveguiding structure. The waveguide usually extends from the center of the lens 5 in a straight line to a distal edge of the lens 3, which is not shown in **Figures 1 and 2****.**

Further to the first waveguide opening 5, the waveguide comprises a second waveguide opening 6, in particular an input (or output) opening of the waveguide. This second waveguide opening 6 is preferably located at a second point 6 on the lens, which is located near an edge of the lens 3, i.e distal relative to the lens optical center 5. In order not to damage the waveguide, the lens(es) 3 may not be fitted to the frame structure 2 by traditional techniques such as edging, which could damage the waveguide. In particular the distance d between the first point 5, which in the present case is the first waveguide opening 5, and the second point 6, which in the present case coincides with the second waveguide opening 6, is constant. This means that the shape and/or size of the lens 3 is constant for different customized frame structures 2.

In order to customize the spectacles 1 to the user, the frame structure 2 is fitted to at least one characteristic facial parameter of that user. Preferably, this facial parameter comprises at least the interpupillary distance IPD, i.e. the distance between the center of both pupils of the user's eyes, which, as mentioned before, preferably corresponds to the distance between the lens optical centers 5 of both lenses 3. In the present exemplary embodiment, the IPD is indicated to be e.g. 60mm. For a symmetric frame structure 2, this means that the distance between the center of the nose bridge portion 4 which preferably coincides with the center of the frame structure in a horizontal direction is 30mm, as indicated as well. Alternatively or additionally to the adjustment with regard to the IPD, the method may comprise an adjustment of the frame structure with regard to the pupil height.

The person skilled in the art acknowledges that although for mere simplicity, the presently illustrated embodiment comprises a fully symmetrical frame structure 2, depending on the user's face, the frame structure 2 may as well be asymmetrical, e.g. because the ears and/or eyes of the user are not at the same height or because the user comprises an asymmetrical nose.

According to the method of the present invention, in a first step, at least one characteristic facial parameter, in particular at least the interpupillary distance IPD, of a user is determined. The interpupillary distance IPD may be directly measured from the user's face or may be entered into a system controlling the execution of the inventive method or may be retrieved, e.g. from a local or remote data bank.

According to the thus obtained at least one facial parameter, here in particular the IPD, the total frame width wₜₒₜ, the frame part width wₚₐᵣₜ, the frame thicknes and/or the frame height h of the frame structure 2 is determined and the frame structure 2 is produced accordingly, preferably printed. The frame thickness is measured in the dimension perpendicular to the drawing plane and therefore not shown here. The frame height is preferably measured from the lowest position of the frame structure 2 to the highest position (with regard to the drawing plane) in a vertical direction. Preferably, the total frame width wₜₒₜ is measured horizontally between the outer edges of the end pieces 7. The frame part width wₚₐᵣₜ is preferably measured either radially relative to the lens optical center 5 or horizontally, e.g. under the nose bridge, in particular at the location of optional nose pads. Both variants are e.g. depicted in **Figure 2****,** where the horizontally measured frame part width wₚₐᵣₜ is shown in dashed lines. The person skilled in the art will acknowledge that depending on the general model, i.e. the general shape of the pair of spectacles 1, the frame part width wₚₐᵣₜ may differ at different locations around the lens 3. Yet, the person skilled in the art understands that in order to modify the frame part width wₚₐᵣₜ to account for a different IPD, in the context of the present invention, the frame part width wₚₐᵣₜ is preferably determined and/or modified at a side of the lens 3 under the nose bridge portion 4.

As here at least one of the lenses 3 comprises a waveguide, which means that distance d between the first waveguide opening 5 and the second waveguide opening 6 has to remain constant, i.e. in particular the shape and/or size of the lens 3 may not be modified, the perfect alignment between the optical center of the lenses 5 and the user's pupils is achieved solely by modifying in particular the total frame width wₜₒₜ, the frame part width wₚₐᵣₜ and/or the frame height h.

In particular, in order to guarantee for a good form fit of the frame structure 2 at the user's nose, additionally the user's nose width at a predetermined position and/or the nose size and/or shape is obtained, in particular measured, and a corresponding nose bridge portion width NBPW of the nose bridge portion 4, such as shown in **Figure 2****,** is determined, e.g. calculated, and the nose bridge portion 4 of the frame structure is produced accordingly. In this case, in order to keep the thus achieved good fit, the nose bridge portion width NBPW has to be kept constant neither and may therefore not be modified to account for the interpupillary distance IPD. Alternatively or additionally, optional nose pads may be produced and/or modified accordingly to account for the user's nose shape and/or size.

It is therefore particularly advantageous to customize the spectacles 1 for a specific user's interpupillary distance IPD by modifying the total frame width wₜₒₜ, the frame part width wₚₐᵣₜ and/or the frame height h.

The person skilled in the art acknowledges that the specific shape of the spectacles 1 shown in **Figure 1** is merely exemplary and may be chosen from a variety of shapes, e.g. from a model shape data bank.

In **Figure 2****,** another embodiment is shown, wherein the basic shape of the spectacles 1 as well as the lenses' 3 shapes and the frame height h are unchanged in comparison with the embodiment shown in **Figure 1****.** Therefore, the above statements regarding **Figure 1** apply to **Figure 2** as well.

In the embodiment of **Figure 2****,** a different interpupillary distance IPD applies, here 68mm. Accordingly, as can be easily seen by comparing the frame structures 2 of **Figures 1 and 2****,** the frame part width wₚₐᵣₜ of the frame structure 2 has been modified to account for the longer interpupillary distance IPD.

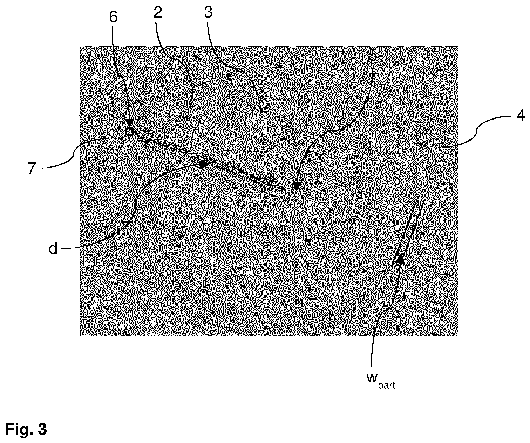

In **Figure 3****,** a detail view of a binocular visual aid produced by a method according to an advantageous embodiment of the present invention is illustrated.

This detail view may e.g. be a detail of one of the spectacles 1 according to the embodiments shown in **Figures 1 or 2****.**

As it may be seen in **Figure 3****,** the lens 3 comprises a first point 5 at the center of the lens 5. The person skilled in the art acknowledges that this lens center 5 may not coincide with the geometrical center of the lens 3 but rather to an optical center 5, i.e. regarding the specific refractive properties of the lens 3. In particular for circular shaped lenses 3, both the optical and the geometrical center of the lens 5 may coincide. The first point 5 is hence the lens optical center 5 and in this case also the first waveguide opening 5. The person skilled in the art understands that the waveguide opening 5 comprises in reality a two- or even three-dimensional extension and is not an abstract (one-dimensional) point as the first point 5. Hence, for all intents and purposes of the present invention, this is in particular to be understand as the first point 5 corresponding to the center of the first waveguide opening 5, in particular in the surface plane of the lens 3 closest to the user's eye.

Furthermore, the lens 3 comprises at a distal region from the center of the lens 3 a second point 6, which according to this particular embodiment coincides with the second waveguide opening 6. Preferably information is transmitted, in particular in optical form, from the second opening 6 to the first opening 5 in order to be displayed for the user and/or vice versa. The second point 6 or second waveguide opening 6 is preferably located at the end pieces 7 of the frame structure 2.

The frame structure 2 may comprise a corresponding opening at the position of the second point 6 as well. Alternatively, the frame structure 2 may comprise a further waveguide embedded therein and in correspondence with the second opening 6 to transmit information to a different location. Even further, the frame structure 2 may not comprise an opening at the position of the second opening 6 of the waveguide but may instead be locally construed to be transparent or susceptible for the wavelength used in the waveguide. In particular if the frame structure 2 and the lens 3 comprising the waveguide are, in particular integrally, produced by means of 3d-printing, this is feasible in the same production step.

As indicated by the arrow, the lens 3 comprises a specific distance d between the first point 5 and the second point 6. In order to correctly couple information in and/or out of the waveguide, this distance d, which coincides with the distance d between the first waveguide opening 5 and the second waveguide opening 6, is constant. This explains why preferably the lens 3 shape and/or size remains unchanged and only the total frame width wₜₒₜ, the frame part width wₚₐᵣₜ, the frame thickness and/or frame height h is modified in the second step in order to account for the interpupillary distance IPD.

### REFERENCE SIGN LIST

- 1: spectacles
- 2: frame structure
- 3: lenses
- 4: nose bridge portion
- 5: first point, lens optical center, first waveguide opening
- 6: second point, second waveguide opening
- 7: end piece

- IPD: interpupillary distance
- NBPW: nose bridge portion width
- d: distance between first point and second point
- h: frame height
- wₜₒₜ: total frame width
- wₚₐᵣₜ: frame part width

## Claims

1. Method for producing a customized visual aid, in particular a binocular visual aid such as spectacles (1), wherein the visual aid comprises a frame structure (2) and at least one lens (3), wherein the frame structure (2) comprises at least a total frame width (wₜₒₜ), a frame part width (wₚₐᵣₜ), a frame height (h) and/or a frame thickness, the method comprising the following steps:
- in a first step at least one characteristic facial parameter of a user is obtained, in particular an interpupillary distance (IPD),
- in a second step the frame structure (2) is produced, wherein the total frame width (wₜₒₜ), the frame part width (wₚₐᵣₜ), the frame thickness and/or the frame height (h) is chosen in dependance on the facial parameter,
- during or after the second step, the at least one lens (3) is produced and/or integrated into the frame structure (2).

2. Method according to claim 1, wherein the characteristic facial parameter is an interpupillary distance (IPD), a face width, a nose width and/or a pupil height.

3. Method according to any one of the preceding claims, wherein the lens comprises a first point (5), which is preferably coincident with the lens optical center (5), and a distal second point (6), which is preferably located in distal end of the lens relative to the first point and in particular in the region of an end piece (7) of the frame structure (2), wherein the distance (d) between the first point (5) and the second point (6) is constant for different lenses (3) and/or different frame structures (2).

4. Method according to any one of the preceding claims, wherein during the first step at least one parameter indicative of the user's vision is obtained, wherein the lens (3) is a corrective lens (3), in particular an ophthalmic lens (3), wherein the lens (3) is produced in dependence of the parameter indicative of the user's vision.

5. Method according to any one of the preceding claims, wherein the frame structure (2) comprises a substantially two-dimensional shape, wherein the frame structure (2) is in particular a frame front.

6. Method according to any one of the preceding claims, wherein the frame structure (2) is attached to a support structure, wherein the support structure preferably comprises at least one temple, wherein the support structure is produced separately or integrally with the frame structure (2).

7. Method according to any one of the preceding claims, wherein the frame structure (2) and/or the lens (3) are produced by means of additive manufacturing, preferably 3d-printing, in particular ink-jet printing.

8. Method according to any one of the preceding claims, wherein the frame structure (2) and the lens (3) are produced integrally and/or in the same production step.

9. Method according to any one of the preceding claims, wherein the lens (3) comprises a further optical component, preferably a light guiding element, in particular a waveguide.

10. Method according to claim 9, wherein the light guiding element comprises a first opening (5) and a second opening (6), wherein preferably the first opening (5) is coincident with the first point (5) and/or the lens optical center (5), wherein more preferably the second opening (6) is coincident with the second point (6).

11. Method according to one of claims 9 or 10, wherein the shape and/or size of the light guiding element is constant for different lenses (3).

12. Method according to one of claims 8-10, wherein during the second step the total frame width (wₜₒₜ), the frame part width (wₚₐᵣₜ), the frame thickness and/or the frame height (h) is chosen such that the further optical component, in particular the first opening (5), is aligned with the user's eye, in particular with a user's pupil, wherein preferably the first opening (5) of the light guiding element is positioned at a closest distance from the user's pupil and/or is positioned such that the user's pupil is aligned with the optical center of the lens (5).

13. Method according to any one of the preceding claims, wherein the frame structure (2) at least partially, preferably fully, surrounds the at least one lens (3).

14. Method according to any one of the preceding claims, wherein the visual aid comprises two lenses (3), wherein the frame structure (2) comprises a bridge portion arranged between both lenses (3), wherein in particular the bridge portion is a nose bridge portion (4) comprising a nose bridge portion width (NBPW), wherein the nose bridge portion (4) is produced in dependence of a corresponding characteristic facial parameter of the user, in particular a nose width.

15. Visual aid, in particular a binocular visual aid, produced by a method according to any of the preceding claims.
